# FASCICULE DE BREVET EUROPEEN

(11) **EP 2 239 874 B1**
(45) Date de publication et mention de la délivrance du brevet: **21.12.2011**
(21) Numéro de dépôt: 10151116.0
(22) Date de dépôt: 19.01.2010
(51) Int. Cl.: H04J 14/02

(54) **Dispositif optique de réception de peignes à séparation fréquentielle inter-canaux**
Vorrichtung zum Empfang von Kämmen mit Zwischenkanalfrequenzabstand
Optical device for receiving combs with inter-channel frequency spacing

(30) Priorité: 08.04.2009 FR 0952294
(43) Date de publication de la demande: 13.10.2010
(73) Titulaire: Alcatel Lucent, 75008 Paris (FR)
(72) Inventeur: Zami, Thierry, 91620, NOZAY (FR); Rofidal, Olivia, 91620, NOZAY (FR)
(74) Mandataire: Keseris, Denis

(56) Documents cités:
- EP-A- 0 874 489
- EP-A- 1 126 293
- EP-A- 1 463 224
- EP-A2- 0 938 205
- US-A1- 2004 151 426

## Description

L'invention concerne les systèmes de transmission optique, et plus précisément certains dispositifs optiques destinés à réceptionner des canaux optiques multiplexés au sein de tels systèmes.

L'invention concerne la réception de peignes de canaux optiques multiplexés en longueurs d'onde (ou WDM (pour « Wavelength-Division Multiplexing »)), indépendamment des éventuels traitements (notamment de routage) qu'aient pu subir ces canaux en amont.

Les documents EP 1463224, EP 1126293, EP 0874489, US US2004/151426 et EP 0938205 divulguent de l'état de la technique pertinent.

Les opérateurs de télécommunications ont constamment besoin d'améliorer l'efficacité spectrale de leurs réseaux optiques afin d'optimiser les coûts de fonctionnement. Pour ce faire, les fabricants de matériels de réseau optique peuvent par exemple associer ce que l'on appelle la détection (ou réception) cohérente à des traitements électroniques pour obtenir des transmissions multiplexées en longueurs d'onde (ou WDM) dont les débits peuvent atteindre 100 Gbits/s pour des canaux de type PDM-QPSK, faisant partie de peignes (ou « combs ») dans lesquels leurs fréquences optiques sont disposées sur une grille de fréquences optiques espacées régulièrement d'un écart Δfd.

On entend ici par « détection (ou réception) cohérente » une détection qui permet de remonter à l'amplitude et à la phase d'un signal (ou canal) optique.

Un écart (fréquentiel) Δfd est dit conventionnel lorsqu'il est égal à l'une des valeurs qui sont définies par l'ITU (« International Telecommunication Union »), à savoir 50 GHz, 100 GHz, 200 GHz ou 400 GHz.

Comme le sait l'homme de l'art, si l'on veut rapidement améliorer l'efficacité spectrale d'un réseau, il est possible de réduire l'écart fréquentiel Δfd entre les canaux WDM. Cette solution entraîne une réduction de la portée de transmission en raison d'une augmentation de la diaphotie (ou « crosstalk ») entre canaux voisins et d'une augmentation des effets non-linéaires nuisibles. Néanmoins, cette solution s'avère intéressante tant que la portée de transmission demeure suffisante. Mais, cette solution présente un autre inconvénient plus important. En effet, si l'on veut utiliser un écart (fréquentiel) Δfd non conventionnel, comme par exemple 125 GHz ou 75 GHz ou encore 40 GHz, il va falloir non seulement développer un nouveau dispositif optique de multiplexage (côté transmission), mais également un nouveau dispositif optique de démultiplexage (côté réception). Or, ce dernier dispositif sera notablement plus onéreux qu'un dispositif adapté à un écart conventionnel du fait d'une production plus limitée.

Pour remédier à cet inconvénient, il est en théorie possible de ne pas effectuer de filtrage fréquentiel (pour le démultiplexage des peignes), si l'on effectue une détection cohérente (la longueur d'onde détectée étant alors fixée par un oscillateur local). Hélas, dans la pratique cela s'avère impossible. En effet, lorsque la détection (en réception) est dépourvue de filtrage fréquentiel, chaque peigne WDM est pré-amplifié au moyen d'un amplificateur avant d'être intégralement transmis au récepteur cohérent. Par conséquent, ce dernier va recevoir chaque canal du peigne avec une puissance qui est égale à la puissance totale en sortie de l'amplificateur divisée par le nombre de canaux du peigne, ce qui s'avère trop faible. En outre, la présence de nombreux autres signaux (ou canaux) dans le voisinage du signal (ou canal) optique principal est de nature à induire des bruits néfastes durant la détection des canaux multiplexés, en particulier si la ligne de détection n'est pas parfaitement équilibrée. Par conséquent, on est contraint de limiter le nombre de canaux vus par un récepteur cohérent, ce qui contraint à effectuer en amont de ce dernier un filtrage fréquentiel.

En d'autres termes, il n'existe pas de solution de filtrage à coût raisonnable permettant d'isoler des canaux multiplexés au sein d'un peigne WDM dont l'écart fréquentiel Δfd est non conventionnel.

L'invention a donc pour but d'améliorer la situation.

Elle propose à cet effet un dispositif optique de réception caractérisé en ce qu'il comprend
des moyens de séparation comprenant une entrée propre à recevoir un peigne de canaux optiques multiplexés et M sorties propres à délivrer M copies dudit peigne reçu,
un premier et un second moyens de démultiplexage comprenant chacun une entrée connectée à l'une desdites M sorties des moyens de séparation pour recevoir une copie dudit peigne et une pluralité de sorties propres à délivrer des canaux optiques démultiplexés, lesdites sorties d'un moyen de démultiplexage présentant à chaque fois des fréquences centrales de filtrage disposées sur une grille de fréquences optiques espacées régulièrement d'un écart constant, lesdites fréquences centrales de filtrage des premier et second moyens de démultiplexage étant décalées les unes des autres d'une valeur de décalage inférieure audit écart constant, et
des modules de réception cohérents connectés à des sorties desdits premier et second moyens de démultiplexage.

Le dispositif selon l'invention peut comporter d'autres caractéristiques qui peuvent être prises séparément ou en combinaison, et notamment :
- M moyens de démultiplexage connectés aux M sorties des moyens de séparation et présentant des fréquences centrales de filtrage décalées les unes des autres d'une valeur de décalage constante égale audit écart constant divisé par M.
- NxM modules de réception cohérents comprenant chacun une entrée connectée à l'une des N sorties desdits M moyens de démultiplexage.
- lesdits moyens de séparation sont agencés sous la forme d'un coupleur optique de type 1 : M agencé pour diviser la puissance dudit peigne reçu en M parties sensiblement égales constituant lesdites M copies du peigne reçu.
- chaque moyen de démultiplexage est agencé sous la forme d'un démultiplexeur de type 1 : N agencé pour filtrer optiquement les canaux d'une copie de peigne reçue sur son entrée, par rapport à une fréquence centrale de filtrage propre, pour délivrer sur ses N sorties N canaux optiques démultiplexés et séparés fréquentiellement les uns des autres dudit écart constant.
- lesdits moyens de démultiplexage comportent des moyens d'accordage pour accorder finement lesdites fréquences centrales de filtrage respectives.
- lesdits moyens de démultiplexage sont du type dit « Array Waveguide Grating ».

L'invention propose également un étage d'extraction de canaux optiques, destiné à faire partie d'un système de transmission otique, et équipé d'au moins un dispositif optique de réception du type de celui présenté ci-avant.

L'invention propose également l'utilisation du dispositif précité pour recevoir un peigne de canaux optiques multiplexés dont les fréquences sont disposées sur une grille de fréquences optiques espacées régulièrement d'un pas inférieur audit écart constant.

Selon un mode de réalisation préféré, ledit pas est inférieur ou égal à la valeur de décalage.

D'autres caractéristiques et avantages de l'invention apparaîtront à l'examen de la description détaillée ci-après, et des dessins annexés, sur lesquels :
- la figure 1 illustre de façon très schématique un dispositif optique de réception selon un mode de réalisation de l'invention, et
- la figure 2 illustre au moyen de quatre diagrammes fréquentiels, d'une part, un peigne reçu, et d'autre part, les filtrages fréquentiels de canaux effectués par trois démultiplexeurs d'un dispositif optique de réception selon un autre mode de réalisation de l'invention.

Les dessins annexés pourront non seulement servir à compléter l'invention, mais aussi contribuer à sa définition, le cas échéant.

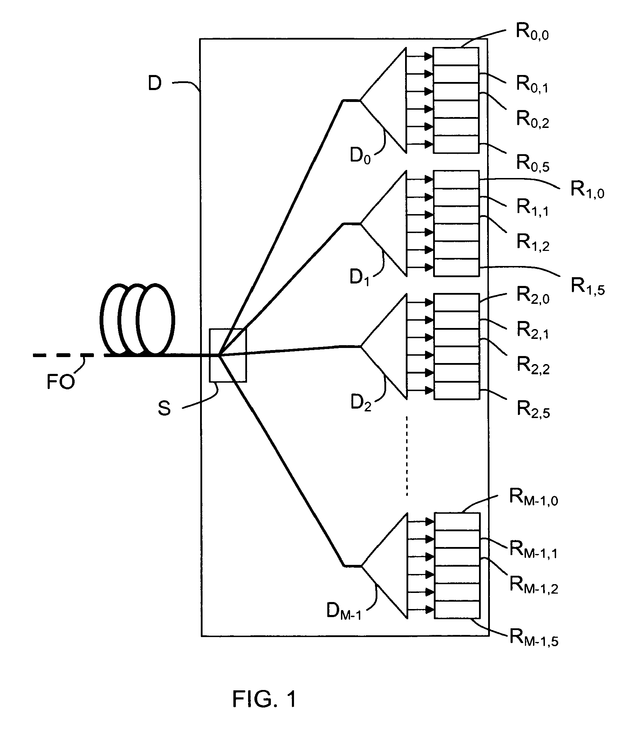

Le dispositif de la figure 1 peut être utilisé pour démultiplexer des canaux multiplexés au sein de peignes WDM reçus, dans lesquels leurs fréquences optiques sont disposées sur une grille de fréquences optiques espacées régulièrement d'un premier écart fréquentiel ou pas Δfc, à l'aide de moyens de démultiplexage (Dₘ) adaptés au démultiplexage de canaux dont les fréquences optiques sont disposées sur une grille de fréquences optiques espacées régulièrement d'un second écart fréquentiel Δfd plus grand que le premier écart fréquentiel.

Dans ce qui suit, on considère à titre d'exemple non limitatif que le dispositif optique de réception (D) fait partie d'une connexion de type point-à-point (c'est-à-dire ne faisant pas l'objet de routage). Mais, l'invention n'est pas limitée à ce type de système de transmission optique.

Par exemple, le dispositif optique de réception (D) peut faire partie d'un étage d'extraction de canaux optiques destiné à faire partie d'un système de transmission optique.

Comme illustré sur la figure 1, un dispositif optique de réception D comprend au moins des moyens de séparation S et M moyens de démultiplexage Dₘ couplés entre eux.

Les moyens de séparation S sont de type 1 : M. Ils comprennent donc une entrée (ou port d'entrée), propre à recevoir un peigne PE de canaux optiques qui sont multiplexés et dont les fréquences optiques sont disposées sur une grille de fréquences optiques espacées régulièrement d'un premier écart Δfc, et M sorties (ou ports de sortie). Dans l'exemple non limitatif illustré, l'entrée des moyens de séparation S est connectée à une extrémité d'une fibre optique FO. Mais cela n'est pas obligatoire.

Ces moyens de séparation S sont agencés de manière à produire M copies du peigne reçu PE et à délivrer ces M copies sur leurs M sorties, respectivement.

Par exemple, ces moyens de séparation S peuvent être agencés sous la forme d'un coupleur optique (ou « splitter ») de type 1 : M. Dans ce cas, chaque copie présente une puissance sensiblement égale à la puissance du peigne reçu PE divisée par M, aux pertes d'insertion près.

Chaque sortie des moyens de séparation S est connectée à l'entrée de l'un des M moyens de démultiplexage Dₘ (m = 0 à M-1), afin de l'alimenter avec l'une des M copies du peigne reçu PE.

Chaque moyen de démultiplexage Dₘ comprend N sorties et présente une fréquence centrale de filtrage propre FCₘ. Les fréquences centrales de filtrage FCₘ des M moyens de démultiplexage Dₘ sont décalées les unes des autres d'une valeur constante V.

On entend ici par « fréquence centrale de filtrage » le centre des fonctions de transfert d'un moyen de démultiplexage Dₘ. Il est rappelé qu'il est équivalent de parler de fréquence de filtrage ou de longueur d'onde de filtrage.

En d'autres termes, si la fréquence centrale de filtrage du premier (m = 0) moyen de démultiplexage D₀ est FC₀, alors la fréquence centrale de filtrage FC₁ du deuxième (m = 1) moyen de démultiplexage D₁ est égale à FC₀ + V, la fréquence centrale de filtrage FC₂ du troisième (m = 2) moyen de démultiplexage D₂ est égale à FC₀ + 2V, et la fréquence centrale de filtrage FC_{M-1} du Mième (m = M-1) et dernier moyen de démultiplexage D_{M-1} est égale à FC₀⁺(M-1)V.

De préférence, chaque sortie d'un moyen de démultiplexage Dₘ est connectée à l'entrée d'un module de réception (ou récepteur) Rₘₙ (n = 0 à N - 1) qui peut faire partie du dispositif D et sur lequel on reviendra plus loin.

Par ailleurs, chaque moyen de démultiplexage Dₘ est agencé de manière à délivrer sur ses N sorties, par filtrage optique, N canaux optiques démultiplexés, extraits d'une copie de peigne, et dont les fréquences optiques sont disposées sur une grille de fréquences optiques espacées régulièrement d'un second écart fréquentiel Δfd.

En d'autres termes, si la première sortie d'un moyen de démultiplexage Dm délivre un canal à la fréquence Fa, alors la deuxième sortie de ce même moyen de démultiplexage Dm délivre un canal à la fréquence Fa + Δfd, la troisième sortie de ce même moyen de démultiplexage Dm délivre un canal à la fréquence Fa + 2Δfd, et la Nième sortie de ce même moyen de démultiplexage Dm délivre un canal à la fréquence Fa + (N - 1)Δfd.

Par exemple, chaque moyen de démultiplexage Dₘ est agencé sous la forme d'un démultiplexeur de type 1 : N.

Toute technique connue de l'homme de l'art et permettant d'accorder finement les fréquences centrales de filtrage FCₘ des M moyens de démultiplexage Dₘ pour qu'elles soient décalées les unes des autres d'une valeur constante V, peut être envisagée. Cela peut notamment se faire par contrôle thermique.

A titre d'exemple non limitatif, les M moyens de démultiplexage Dₘ peuvent être du type dit « Array Waveguide Grating » (ou AWG). Ce type de démultiplexeur est avantageux car sa fréquence centrale de filtrage FCₘ peut être assez facilement et assez précisément contrôlée thermiquement. Bien entendu, d'autres types de moyen de démultiplexage peuvent être utilisés.

Dans l'exemple non limitatif illustré sur la figure 1, chaque moyen de démultiplexage Dₘ comprend six sorties (référencées par un indice n, n = 0 à 5). Mais, l'invention s'applique dès lors que chaque moyen de démultiplexage Dₘ comprend au moins deux sorties.

Par ailleurs, dans l'exemple non limitatif illustré sur la figure 1, le dispositif D comprend au moins quatre moyens de démultiplexage Dₘ (D₀, D₁, D₂, D_{M-1}). Mais, l'invention s'applique dès lors que le dispositif D comprend au moins deux moyens de démultiplexage Dₘ.

Dans un mode de réalisation particulièrement avantageux, les fréquences centrales de filtrage FCₘ peuvent être décalées les unes des autres d'une valeur constante V qui est choisie égale au rapport entre le second écart fréquentiel Δfd et M, soit V = Δfd / M, et le second écart fréquentiel Δfd est choisi égal au produit du premier écart fréquentiel Δfc par M, soit Δfd = M*Δfc.

Par conséquent, si la fréquence centrale de filtrage du premier (m = 0) moyen de démultiplexage D₀ est FC₀, alors la fréquence centrale de filtrage FC₁ du deuxième (m = 1) moyen de démultiplexage D₁ est égale à FC₀ + Δfd / M, la fréquence centrale de filtrage FC₂ du troisième (m = 2) moyen de démultiplexage D₂ est égale à FC₀ + 2Δfd / M, et la fréquence centrale de filtrage FC_{M-1} du Mième (m = M-1) et dernier moyen de démultiplexage D_{M-1} est égale à FC₀ + (M - 1)Δfd / M.

On va donc précisément aligner le centre des fonctions de transfert de chaque moyen de démultiplexage Dₘ sur les fréquences des canaux d'un sous ensemble de canaux du peigne reçu PE. Par conséquent, tous les canaux dont les fréquences (ou longueurs d'onde) sont alignées sur la fréquence centrale FCm (décalée de m Δfc (= m Δfd / M)) d'un moyen de démultiplexage Dₘ, modulo Δfd, seront filtrés par ce dernier (Dₘ).

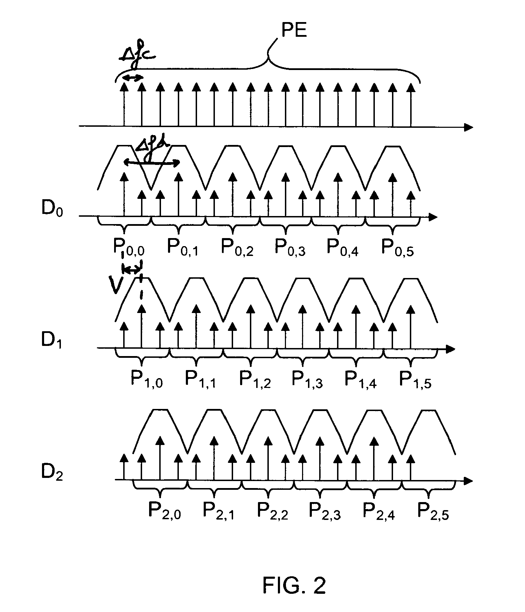

Ainsi, si le peigne reçu PE présente un premier écart fréquentiel Δfc non conventionnel, par exemple égal à 33,33 GHz, et que l'on utilise des moyens de démultiplexage Dₘ de type conventionnel (appartenant à la grille ITU), par exemple adaptés à un second écart fréquentiel Δfd égal à 100 GHz, alors le nombre M de ces moyens de démultiplexage Dₘ doit être choisi égal à trois (3 x 33,33 GHz = 100 GHz, m = 0 à 2). En d'autres termes, les fréquences centrales de filtrage FCₘ des M moyens de démultiplexage Dₘ doivent être décalées les unes des autres (ou mutuellement) de 33,33 GHz. Cet exemple non limitatif est illustré sur les diagrammes fréquentiels de la figure 2. Dans cet exemple non limitatif, chaque moyen de démultiplexage Dₘ comprend six sorties (N = 6).

Plus précisément, le premier diagramme fréquentiel en partant du haut matérialise un peigne reçu PE, le deuxième diagramme fréquentiel en partant du haut matérialise le filtrage fréquentiel de canaux qui est effectué par le premier démultiplexeur D₀ sur la première copie du peigne reçu PE (fournie par les moyens de séparation S), le troisième diagramme fréquentiel en partant du haut matérialise le filtrage fréquentiel de canaux qui est effectué par le deuxième démultiplexeur D₁ sur la deuxième copie du peigne reçu PE (fournie par les moyens de séparation S), et le quatrième diagramme fréquentiel en partant du haut matérialise le filtrage fréquentiel de canaux qui est effectué par le troisième démultiplexeur D₂ sur la troisième copie du peigne reçu PE (fournie par les moyens de séparation S).

On notera que dans cet exemple non limitatif la largeur des fonctions de filtrage fréquentiel appliquées par chacun des trois démultiplexeurs D₀ à D₂ aux canaux d'une copie de peigne reçue est plus large que le premier écart fréquentiel Δfc entre les canaux. Par conséquent, chacune des N sorties (N = 6) d'un démultiplexeur Dₘ peut laisser passer plusieurs canaux (ici au maximum trois). Le canal qui présente une fréquence sensiblement égale à la fréquence centrale de la fonction de filtrage fréquentiel qui est associée à une sortie possède sur cette sortie une puissance qui est supérieure à celles des deux autres canaux. Or, c'est seulement le canal qui présente une fréquence sensiblement égale à la fréquence centrale de la fonction de filtrage fréquentiel associée à une sortie qui doit être retenu.

Cette sélection peut être effectuée par chaque module de réception (ou récepteur) Rₘₙ qui est connecté à l'une des N sorties d'un démultiplexeur Dₘ, en particulier s'il est de type cohérent. Il est rappelé qu'un récepteur est de type cohérent si il effectue une détection cohérente lui permettant de déterminer la phase et l'amplitude du signal (canal) reçu. Pour ce faire, un récepteur peut par exemple comporter un oscillateur local délivrant une lumière laser, ayant la même longueur d'onde que celle de la porteuse du signal (ou canal) que l'on cherche à détecter, et qui va interférer avec les signaux reçus. La longueur d'onde de chaque oscillateur local va ainsi permettre de filtrer automatiquement le signal délivré par une sortie d'un démultiplexeur Dₘ. Ainsi, même si le signal (ou canal) à détecter est accompagné par d'autres signaux (ou canaux) optiques ayant des longueurs d'onde différentes de la sienne, ces derniers signaux (« parasites ») ne seront pas retenus par le récepteur cohérent Rₘₙ car les battements induits par la lumière laser de son oscillateur local seront à des fréquences bien plus élevées que celles de sa chaîne de détection électrique.

On notera que lorsque la largeur des fonctions de filtrage fréquentiel des moyens de démultiplexage Dₘ est moins large que le premier écart fréquentiel Δfc entre les canaux d'une copie de peigne, on peut utiliser des modules de réception Rₘₙ qui effectuent une détection quadratique conventionnelle et non une détection cohérente.

Dans ce qui précède on a présenté un exemple non limitatif dans lequel le premier écart fréquentiel Δfc était égal à 33,33 GHz et les moyens de démultiplexage Dₘ étaient adaptés à un second écart fréquentiel Δfd égal à 100 GHz imposant un nombre M égal à trois. Mais, de nombreuses autres combinaisons peuvent être envisagées. Ainsi, si le premier écart fréquentiel Δfc est égal à 40 GHz et que les moyens de démultiplexage Dₘ sont adaptés à un second écart fréquentiel Δfd égal à 200 GHz, le nombre M de moyens de démultiplexage Dₘ doit être choisi égal à cinq. Dans une autre variante, si le premier écart fréquentiel Δfc est égal à 25 GHz et que les moyens de démultiplexage Dₘ sont adaptés à un second écart fréquentiel Δfd égal à 50 GHz, le nombre M de moyens de démultiplexage Dₘ doit être choisi égal à deux.

On notera que l'invention s'applique également aux situations dans lesquelles les premier Δfc et second Δfd écarts fréquentiels sont tous les deux non conventionnels.

L'invention ne se limite pas aux modes de réalisation de dispositif optique de réception et d'étage d'extraction décrits ci-avant, seulement à titre d'exemple, mais elle englobe toutes les variantes que pourra envisager l'homme de l'art dans le cadre des revendications ci-après.

## Revendications

1. Dispositif optique (D) de réception, comprenant
des moyens de séparation (S) comprenant une entrée pour recevoir un peigne de canaux optiques multiplexés dont les fréquences sont disposées sur une grille de fréquences optiques espacées régulièrement d'un pas (Δfc) et M sorties propres à délivrer M copies dudit peigne reçu,
un premier et un second moyens de démultiplexage (Dₘ) comprenant chacun une entrée connectée à l'une desdites M sorties des moyens de séparation (S) pour recevoir une copie dudit peigne et une pluralité de sorties propres à délivrer des canaux optiques démultiplexés, lesdites sorties d'un desdits moyens de démultiplexage (Dm) préséntant, dans chacun desdits moyens de démultiplexage (Dm) des fréquences centrales de filtrage disposées sur une grille de fréquences optiques espacées régulièrement d'un écart constant (Δfd) plus grand que le pas (Δfc) dudit peigne de canaux optiques, lesdites fréquences centrales de filtrage des premier et second moyens de démultiplexage (Dm) étant décalées les unes des autres d'une valeur de décalage (V) inférieure audit écart constant (Δfd), et **caractérisé en ce que** le dispositif (D) comprend des modules (Ri,j) de réception cohérents connectés à des sorties desdits premier et second moyens de démultiplexage (Dm), et que chacun desdits moyens de démultiplexage (Dm) est apte à appliquer à ladite copie du peigne de canaux optiques une fonction de filtrage fréquentiel présentant une largeur plus grande que le pas (Δfc) dudit peigne de canaux optiques, de sorte que chacune desdites sorties des premier et second moyens de démultiplexage (Dm) laisse passer plusieurs canaux optiques dudit peigne vers le module (Ri,j) de réception cohérent connecté à ladite sortie.

2. Dispositif selon la revendication 1, **caractérisé en ce qu'**il comporte M moyens de démultiplexage (Dm) connectés aux M sorties des moyens de séparation (S) et présentant des fréquences centrales de filtrage décalées les unes des autres d'une valeur de décalage (V) constante égale audit écart constant (Δfd) divisé par M.

3. Dispositif selon l'une des revendications 1 et 2, **caractérisé en ce que** lesdits moyens de séparation (S) sont agencés sous la forme d'un coupleur optique de type 1 : M agencé pour diviser la puissance dudit peigne reçu en M parties sensiblement égales constituant lesdites M copies du peigne reçu.

4. Dispositif selon l'une des revendications 1 à 3, **caractérisé en ce que** chaque moyen de démultiplexage (Dₘ) est agencé sous la forme d'un démultiplexeur de type 1 : N agencé pour filtrer optiquement les canaux d'une copie de peigne reçue sur son entrée, par rapport à une fréquence centrale de filtrage propre, pour délivrer sur ses N sorties N canaux optiques démultiplexés et séparés fréquentiellement les uns des autres dudit écart constant (Δfd).

5. Dispositif selon l'une des revendications 1 à 4, **caractérisé en ce que** lesdits moyens de démultiplexage (Dₘ) comportent des moyens d'accordage pour accorder finement lesdites fréquences centrales de filtrage respectives.

6. Dispositif selon l'une des revendications 1 à 5, **caractérisé en ce que** lesdits moyens de démultiplexage (Dₘ) sont du type dit « Array Waveguide Grating ».

7. Dispositif selon la revendication 2, **caractérisé en ce qu'**il comprend NxM modules de réception cohérents (Rₘₙ) comprenant chacun une entrée connectée à l'une des N sorties desdits M moyens de démultiplexage (Dₘ).

8. Dispositif selon l'une des revendications 1 à 7, dans lequel ledit pas (Δfc) est inférieur ou égal à la valeur de décalage (V).

9. Etage d'extraction de canaux optiques pour un système de transmission optique, **caractérisé en ce qu'**il comprend au moins un dispositif optique de réception (D) selon l'une des revendications précédentes.

## Claims

1. An optical reception device (D), comprising means of separation (S) comprising
one input for receiving a comb of multiplexed optical channels spaced apart by one pitch (Δfc) at regular intervals, and M outputs capable of delivering M copies of said received comb,
a first and second means of demultiplexing (Dm) each comprising an input connected to one of said M outputs of the means of separation (S) in order to receive a copy of said comb, and a plurality of outputs capable of delivering multiplexed optical channels, said outputs of one of said means of demultiplexing (Dm) exhibiting, within each of said means of demultiplexing (Dm), central filtering frequencies disposed across a grid of optical frequencies spaced apart at regular intervals by a constant gap (Δfd) greater than the pitch (Mc) of said comb of optical channels, said central filtering frequencies of the first and second means of demultiplexing (Dm) being distant from one another by a distancing value (V) less than said constant gap (Δfd), and **characterized in that** the device (D) comprises coherent reception modules (Rij) connected to outputs of said first and second means of demultiplexing (Dm), and that each of said means of demultiplexing (Dm) is capable of applying to said copy of the comb of optical channels a frequency filtering function exhibiting a width greater than the pitch (Δfc) of said comb of optical channels, such that each of said outputs of the first and second means of demultiplexing (Dm) allows multiple optical channels of said comb to pass through to the coherent reception module (Rij) connected to said output.

2. A device according to claim 1, **characterized in that** it comprises M means of demultiplexing (Dm) connected to M outputs of the means of separation (S) and exhibiting central filtering frequencies distant from one another by a constant distancing value (V) equal to said constant gap (Δfd) divided by M.

3. A device according to one of the claims 1 and 2, **characterized in that** said means of separation (S) are configured in the form of a 1:M optical coupler configured to divide the power of said received comb into M parts roughly equal to one another, forming said M copies of the received comb.

4. A device according to one of the claims 1 to 3, **characterized in that** each means of demultiplexing (Dm) is configured in the form of a 1:N demultiplexer configured to optimally filter the channels of one copy of the comb received at its input, in relation to a specific central filtering frequency, in order to deliver at its N outputs N demultiplexed optical channels whose frequencies are separated from one another by the constant gap (Δfd).

5. A device according to one of the claims 1 to 4, **characterized in that** said means of demultiplexing (Dm) comprise tuning means in order to finely tune said respective central filtering frequencies.

6. A device according to one of the claims 1 to 5, **characterized in that** said means of demultiplexing (Dm) are of the type known as "Array Waveguide Grating."

7. A device according to claim 2, **characterized in that** it comprises NxM coherent reception modules (Rmn) each comprising an input connected to one of N outputs of said M means of demultiplexing (Dm).

8. A device according to one of the claims 1 to 7, wherein said pitch (Δfc) is less than or equal to the distancing value (V).

9. A stage of extracting optical channels for an optical transmission system, **characterized in that** comprises at least one optical reception device (D) according to one of the preceding claims.

## Patentansprüche

1. Optische Empfangseinrichtung (D) mit Trennmitteln (S), umfassend einen Eingang für den Empfang eines Kamms mit gemultiplexten optischen Kanälen, deren Frequenzen auf einem Gitter von optischen Frequenzen in gleichmäßigen Abständen (Δfc) angeordnet sind, und M Ausgänge, welche für das Liefern von M Kopien des besagten empfangenen Kamms ausgelegt sind,
ein erstes und ein zweites Demultiplexmittel (Dₘ), welche jeweils einen an einen der besagten M Ausgänge der Trennmittel (S) angeschlossenen Eingang für den Empfang einer Kopie des besagten Kamms, und eine Mehrzahl von Ausgängen, welche für das Liefern von gedemultiplexten optischen Kanälen ausgelegt sind, umfassen, wobei die besagten Ausgänge der besagten Demultiplexmittel (Dₘ) in einem jeden der besagten Demultiplexmittel (Dₘ) zentrale Filterfrequenzen, welche auf einem Gitter von optischen Frequenzen, die mit einem konstanten Abstand (Δfd), welcher größer ist als der Abstand (Δfc) des besagten Kamms mit optischen Kanälen, gleichmäßig beabstandet sind, aufweisen, wobei die besagten zentralen Filterfrequenzen des ersten und des zweiten Demultiplexmittels (Dₘ) mit einem Versatzwert (V), welcher kleiner ist als der konstante Abstand (Δfd), voneinander abgesetzt sind, und **dadurch gekennzeichnet, dass** die besagte Einrichtung (D) kohärente Empfangsmodule (Rij) umfasst, welche an Ausgänge des besagten ersten und des besagten zweiten Demultiplexmittels (Dₘ) angeschlossen sind, und dass ein jedes der besagten Demultiplexmittel (Dₘ) dazu ausgelegt ist, auf die besagte Kopie des Kamms mit optischen Kanälen eine Frequenzfilterfunktion anzuwenden, deren Breite größer ist als der Abstand (Δfc) des besagten Kamms mit optischen Kanälen, so dass ein jeder der besagten Ausgänge des ersten und des zweiten Demultiplexmittels (Dₘ) mehrere optische Kanäle des besagten Kamms an das an den besagten Ausgang angeschlossene kohärente Empfangsmodul (Rij) durchlässt.

2. Einrichtung nach Anspruch 1, **dadurch gekennzeichnet, dass** sie M Demultiplexmittel (Dₘ) umfasst, welche an die M Ausgänge der Trennmittel (S) angeschlossen sind und zentrale Filterfrequenzen aufweisen, die mit einem konstanten Versatzwert (V), welcher dem besagten konstanten Abstand (Δfd) geteilt durch M entspricht, voneinander abgesetzt sind.

3. Einrichtung nach einem der Ansprüche 1 und 2, **dadurch gekennzeichnet, dass** die besagten Trennmittel (S) in der Form eines optischen Kopplers vom Typ 1 : M für das Aufteilen der Leistung des besagten empfangenen Kamms in M im Wesentlichen gleiche Teile, welche die besagten M Kopien des empfangenen Kamms bilden, ausgelegt sind.

4. Einrichtung nach einem der Ansprüche 1 bis 3, **dadurch gekennzeichnet, dass** jedes Demultiplexmittel (Dₘ) in der Form eines Demultiplexers vom Typ 1 : N ausgebildet und für das optische Filtern der Kanäle einer an seinem Eingang empfangenen Kammkopie in Bezug auf eine eigene zentrale Filterfrequenz ausgelegt ist, um auf seinen N Ausgängen N gedemultiplexte und mit dem besagten konstanten Abstand (Δfd) voneinander frequenzgetrennte optische Kanäle zu liefern.

5. Einrichtung nach einem der Ansprüche 1 bis 4, **dadurch gekennzeichnet, dass** die besagten Demultiplexmittel (Dₘ) Abstimmmittel zur Feinabstimmung der besagten jeweiligen zentralen Filterfrequenzen umfassen.

6. Einrichtung nach einem der Ansprüche 1 bis 5, **dadurch gekennzeichnet, dass** die besagten Demultiplexmittel (Dₘ) vom Typ des sogenannten "Array Waveguide Grating" sind.

7. Einrichtung nach Anspruch 2, **dadurch gekennzeichnet, dass** sie NxM kohärente Empfangsmodule (Rₘₙ) umfasst, welche jeweils einen an einen der N Ausgänge der besagten M Demultiplexmittel (Dₘ) angeschlossenen Eingang aufweisen.

8. Einrichtung nach einem der Ansprüche 1 bis 7, wobei der besagte Abstand (Δfd) kleiner als oder gleich dem Versatzwert (V) ist.

9. Stufe zum Extrahieren von optischen Kanälen für ein optisches Übertragungssystem, **dadurch gekennzeichnet, dass** es mindestens eine optische Empfangseinrichtung (D) gemäß einem der vorstehenden Ansprüche umfasst.
